# EUROPEAN PATENT SPECIFICATION

(11) **EP 2 696 225 B1**
(45) Date of publication and mention of the grant of the patent: **30.03.2016**
(21) Application number: 11852215.0
(22) Date of filing: 17.11.2011
(51) Int. Cl.: G02B 5/30, G02B 1/00

(54) **METAMATERIAL-BASED DEPOLARIZER**
DEPOLARISIERER AUF METAMATERIALBASIS
DISPOSITIF DE DÉPOLARISATION À BASE DE MÉTAMATÉRIAUX

(30) Priority: 31.03.2011 CN 201110080652
(43) Date of publication of application: 12.02.2014
(73) Proprietor: Kuang-chi Innovative Technology Ltd., ShenZhen, Guangdong 518034 (CN); Kuang-Chi Institute of Advanced Technology, Shenzhen, Guangdong 518057 (CN)
(72) Inventor: LIU, Ruopeng, Shenzhen, Guangdong 518057 (CN); XU, Guanxiong, Shenzhen, Guangdong 518057 (CN); JI, Chunlin, Shenzhen, Guangdong 518057 (CN); REN, Chunyang, Shenzhen, Guangdong 518057 (CN)
(74) Representative: Machtalère, Georges
(86) International application number: PCT/CN2011/082317
(87) International publication number: WO 2012/129915

(56) References cited:
- CN-A- 101 389 998
- JP-A- 2008 226 405
- JP-A- 2011 033 564
- US-A1- 2009 174 941
- US-A1- 2009 201 572
- US-A1- 2010 225 562
- US-A1- 2010 225 562
- ZHAO YANG ET AL: "Broadband circular polarizer formed by stacked plasmonic metasurfaces", PHOTONIC AND PHONONIC PROPERTIES OF ENGINEERED NANOSTRUCTURES, SPIE, 1000 20TH ST. BELLINGHAM WA 98225-6705 USA, vol. 7946, no. 1, 10 February 2011 (2011-02-10), pages 1-6, XP060007720, DOI: 10.1117/12.881288 [retrieved on 2011-02-28]

## Description

### FIELD OF THE INVENTION

The present disclosure generally relates to the technical field of metamaterials, and more particularly, to a depolarizer based on a metamaterial.

### BACKGROUND OF THE INVENTION

Polarization of an electromagnetic wave refers to a property that a field vector (e.g., an electric field vector or a magnetic field vector) at a fixed position in the space varies with the time. Usually, a trajectory of an end of an electric field strength E vector changing with the time is used to describe polarization of the wave. For an electromagnetic wave, a polarization manner of the wave can be determined from amplitude and phase relationships between two orthogonal components of the electric field component. Specifically, if the E vector vibrates in only one direction within a period, then the wave is called a linearly polarized wave; and if the trajectory of the end of the E vector forms an ellipse or a circle, then the wave is called an elliptically or circularly polarized wave.

In some application scenarios (e.g., for electromagnetic shielding), depolarization is required. In the prior art, depolarization is usually accomplished by means of the optical birefringence property. However, this technology is relatively complex.

The US application US 2009/0174941 discloses an optical system to generate light of which polarized components are substantially removed. The optical system comprises a light source, a lens system and an optical element. The optical element has a first phasor array and a second phasor array for substantially removing depolarized components of the light emitted from the light source. The first phasor array may be a 1/2 phasor array in which a plurality of 1/2 phasors is arranged, and the second phasor array may be a 1/4 phasor array in which a plurality of 1/4 phasors is arranged. The first phasor array is consisted of first phasors and second phasors having the phase delaying axis different from that of the first phasors. However, the first phasors and the second phasors are made of 1/2 wavelength plates. Similarly, the second phasor array is consisted of third phasors and fourth phasors having the phase delaying axis different from that of the third phasors. However, the third phasors and the fourth phasors are made of 1/4 wavelength plates.

Another conventional technology disclosed in "Broadband circular polarizer formed by stacked phastnonic metasurfaces" of ZHAO YANG et al., discloses an optical metamaterials, which is obtained by properly stacking lithographically printed plasmonic metasurfaces with simple patterns, and rotating each one of them with respect to the neighboring one.

The US application US 2010/0225562 discloses a broadband metamaterial apparatus, which comprises two impedance matching layers (IML), and a beam steering layer or a beam focusing layer arranged between the two impedance matching layers to form a beam-steering element based on a linear index gradient or a beam focusing lens based on a higher order polynomial index gradient. The index of the beam focusing layer is increased from 1.16 to 1.75, and then decreased from 1.75 to 1.16.

### SUMMARY OF THE INVENTION

An objective of the present disclosure is to provide a depolarizer based on a metamaterial that is simple in structure as defined in claim 1.

To achieve the aforesaid objective, the present disclosure provides a depolarizer based on a metamaterial, which comprises a plurality of sheet layers parallel with each other. Each of the sheet layers has a sheet substrate and a plurality of man-made microstructures attached on the sheet substrate. The sheet substrate is formed of a ceramic, a polymer material, a ferroelectric material, a ferrite material or a ferromagnetic material and is divided into a plurality of identical unit bodies. Each of the unit bodies and one of the man-made microstructures that is attached thereon form a cell that has an anisotropic electromagnetic property. Each of the sheet layers has at least two cells whose optical axes are unparallel with each other. The man-made microstructures are metal microstructures, each of which is a metal wire that is attached on the sheet substrate and that has a pattern, and the pattern of the metal wire is a non-90° rotationally symmetrical pattern.

Further, the optical axes of all the cells in each of the sheet layers are unparallel with each other.

Further, the metal wire is of a two-dimensional (2D) snowflake form having a first main line and a second main line perpendicular to each other in a "+" form, two first branch lines are disposed perpendicularly at two ends of the first main line respectively, and two second branch lines are disposed perpendicularly at two ends of the second main line respectively.

Further, the first main line and the second main line bisect each other, the two first branch lines have their respective centers connected by the first main line, and the two second branch lines have their respective centers connected by the second main line.

Further, the metal wire is attached on the sheet substrate through etching, electroplating, drilling, photolithography, electron etching or ion etching.

Further, the polymer material includes polytetrafluoroethylene (PTFE), an FR-4 composite material or an F4b composite material.

To achieve the aforesaid objective, the present disclosure further provides a depolarizer based on a metamaterial, which comprises a plurality of sheet layers parallel with each other. Each of the sheet layers has a sheet substrate and a plurality of man-made microstructures attached on the sheet substrate. The sheet substrate is divided into a plurality of identical unit bodies. Each of the unit bodies and one of the man-made microstructures that is attached thereon form a cell that has an anisotropic electromagnetic property, and each of the sheet layers has at least two cells whose optical axes are unparallel with each other.

Further, the optical axes of al the cells in each of the sheet layers are unparallel with each other.

Further, the man-made microstructures are metal microstructures, each of which is a metal wire that is attached on the sheet substrate and that has a pattern, and the pattern of the metal wire is a non-90° rotationally symmetrical pattern.

Further, the metal wire is attached on the sheet substrate through etching, electroplating, drilling, photolithography, electron etching or ion etching.

Further, the metal wire is of a 2D snowflake form having a first main line and a second main line perpendicular to each other in a "+" form, two first branch lines are disposed perpendicularly at two ends of the first main line respectively, and two second branch lines are disposed perpendicularly at two ends of the second main line respectively.

Further, the first main line and the second main line bisect each other, the two first branch lines have their respective centers connected by the first main line, and the two second branch lines have their respective centers connected by the second main line.

Further, the sheet substrate is formed of a ceramic, a polymer material, a ferroelectric material, a ferrite material or a ferromagnetic material.

Further, the polymer material includes polytetrafluoroethylene (PTFE), an FR-4 composite material or an F4b composite material.

In the depolarizer based on a metamaterial of the present disclosure, at least two cells whose optical axes are unparallel with each other are disposed in each of the metalmaterial sheet layers. Therefore, when an electromagnetic wave having a uniform polarization property propagates through the metamaterial, at least part of the electromagnetic wave will be changed in polarization property, thus achieving the purpose of depolarization. Moreover, as compared to the prior art, the depolarizer of the present disclosure features a simple structure and is easy to be implemented.

### BRIEF DESCRIPTION OF THE DRAWINGS

FIG. 1 is a schematic view illustrating distribution of optical axes in a sheet layer in a first illustrative example of a depolarizer according to the present disclosure;
FIG. 2 is a schematic view illustrating arrangement of man-made microstructures of an "I" form that are used in the depolarizer corresponding to the distribution of optical axes shown in FIG. 1;
FIG. 3 is a schematic view illustrating distribution of optical axes in a sheet layer in a second illustrative example of the depolarizer according to the present disclosure;
FIG. 4 is a schematic view illustrating arrangement of man-made microstructures of an "I" form that are used in the depolarizer corresponding to the distribution of optical axes shown in FIG. 3;
FIG. 5 is a schematic view illustrating distribution of optical axes in a sheet layer in a third illustrative example of the depolarizer according to the present disclosure;
FIG. 6 is a schematic view illustrating arrangement of man-made microstructures of an "I" form that are used in the depolarizer corresponding to the distribution of optical axes shown in FIG. 5;
FIG. 7 is a schematic view illustrating a metal microstructure of a 2D snowflake form according to an embodiment of the invention; and
FIG. 8 is a schematic view illustrating stacking of the sheet layers.

### DETAILED DESCRIPTION OF THE INVENTION

Hereinbelow, the present disclosure will be described in detail with reference to the attached drawings and embodiments thereof.

"Metamaterials" refer to a kind of man-made composite structures or composite materials having supernormal physical properties that are not owned by natural materials. Through orderly structural design on key physical dimensions of the materials, limitations of some apparent natural laws can be broken through so as to obtain supernormal material functions that go beyond common properties inherent in the nature.

The "metamaterials" have the following three important features:
(1) the "metamaterials" are usually composite materials having novel man-made structures;
(2) the "metamaterials" have supernormal physical properties (which are usually not owned by natural materials); and
(3) the properties of the "metamaterials" are determined by both intrinsic properties of component materials and man-made microstructures therein.

In the present disclosure, a depolarizer based on a metamaterial is formed by using a metamaterial, which will be described in detail as follows.

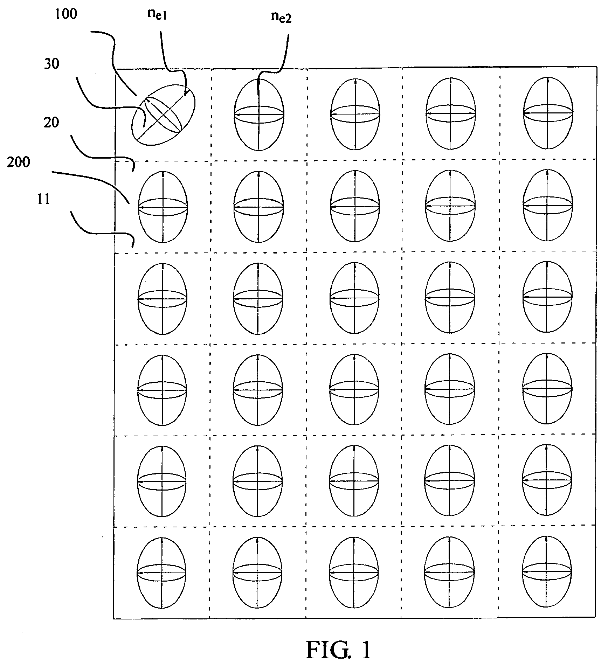

As shown in FIG. 1 to FIG. 8, the depolarizer 10 based on a metamaterial according to the present disclosure comprises a plurality of sheet layers 20 parallel with each other. Each of the sheet layers has a sheet substrate 11 and a plurality of man-made microstructures 2 attached on the sheet substrate. The sheet substrate 11 is divided into a plurality of identical unit bodies 100 (blocks shown by dashed lines in FIG. 1). Each of the unit bodies 100 and one of the man-made microstructures 2 that is attached thereon form a cell 200 that has an anisotropic electromagnetic property. Each of the sheet layers 20 has at least two cells 200 whose optical axes are unparallel with each other. The optical axis here refers to a major axis of a refractive index ellipsoid 30 of each cell, and the refractive index ellipsoid 30 here refers to a spatial distribution of refractive indices of each cell. When an incident electromagnetic wave having a uniform polarization property propagates through two cells whose optical axes are unparallel with each other, two orthogonal components (one is parallel with the optical axis and the other is perpendicular to the optical axis) of an electric field vector are affected by the two cells to different extents (i.e., phase differences will not change synchronously any longer). Thus, after the two parts of the electromagnetic wave exit from the two cells, the respective polarization properties will not be synchronous any longer. In this way, the purpose of depolarization is achieved; i.e., at least part of the electromagnetic wave will be changed in polarization property. For example, if the incident electromagnetic wave is a horizontally polarized wave, then a part of the electromagnetic wave when exiting is changed into a vertically polarized wave while the other part of the electromagnetic wave when exiting is changed into a circularly polarized wave.

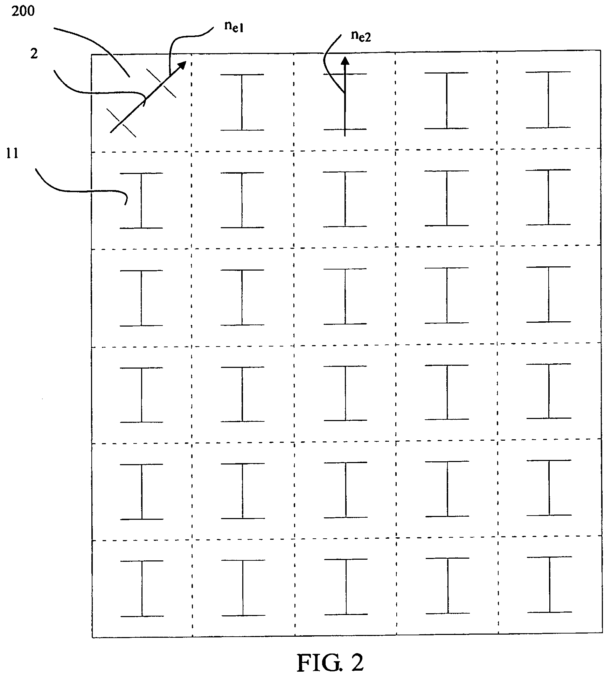

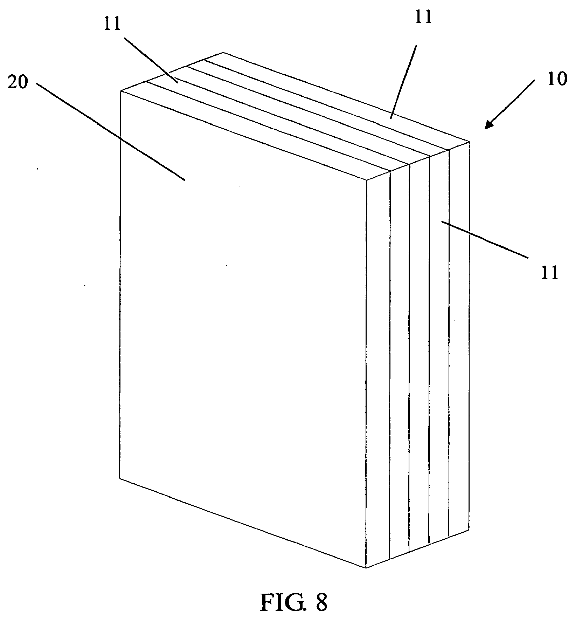

As shown in FIG. 1, there is only one cell whose optical axis nₑ₁ is different from others in this embodiment, and nₑ₂ represents an optical axis of each of the other cells. As can be seen from FIG. 1, the optical axis nₑ₁ is unparallel with the optical axis nₑ₂. FIG. 2 illustrates use of man-made microstructures of an "I" form to achieve the two-dimensional (2D) distribution of the optical axes shown in FIG. 1. In this embodiment, when the electromagnetic wave having a uniform polarization property propagates through all the cells, a part of the electromagnetic wave that propagates through the cell having the optical axis nₑ₁ will have a different polarization property from other parts of the electromagnetic wave. FIG. 1 only shows a schematic plan view of one sheet layer in this embodiment; and distribution of optical axes of other sheet layers may be the same as or different from that of the sheet layer shown in FIG. 1 so long as the electromagnetic wave can be partially changed in polarization property when exiting. FIG. 8 is a schematic view illustrating stacking of the sheet layers.

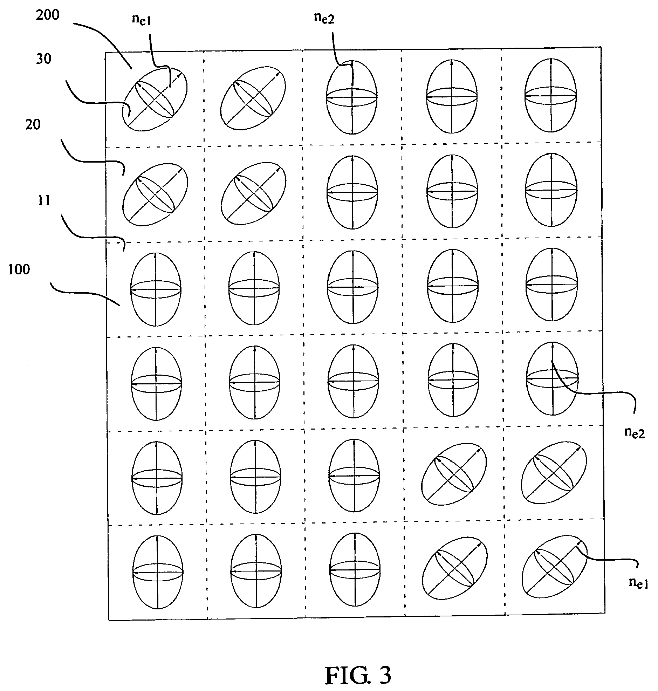

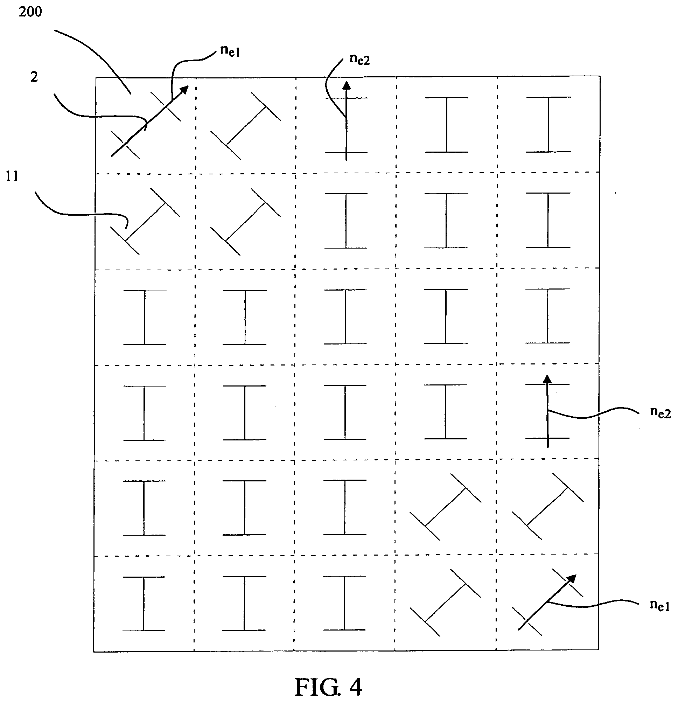

As shown in FIG. 3, optical axes nₑ₁ at the upper left comer and the lower right corner of the metamaterial are rotated in this embodiment, nₑ₂ represents the other optical axes, and the optical axes nₑ₁ are unparallel with the optical axes nₑ₂. FIG. 4 illustrates use of man-made microstructures of an "I" form to achieve the 2D distribution of the optical axes shown in FIG. 3 which is not part of the invention. In this embodiment, when the electromagnetic wave having a uniform polarization property propagates through all the cells, a part of the electromagnetic wave that propagates through the cells having the optical axes nₑ₁ will have a different polarization property from other parts of the electromagnetic wave. Likewise, FIG. 3 only shows a schematic plan view of one sheet layer in this embodiment; and distribution of optical axes of other sheet layers may be the same as or different from that of the sheet layer shown in FIG. 3 so long as the electromagnetic wave can be partially changed in polarization property when exiting. FIG. 8 is a schematic view illustrating stacking of the sheet layers.

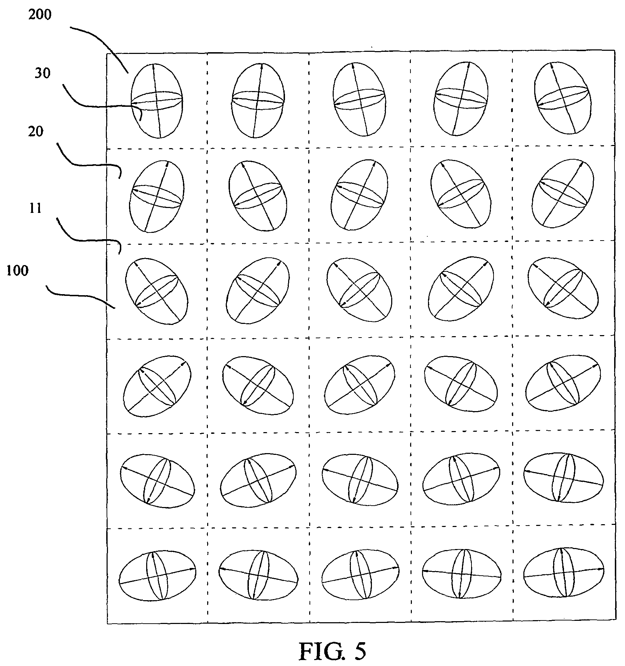

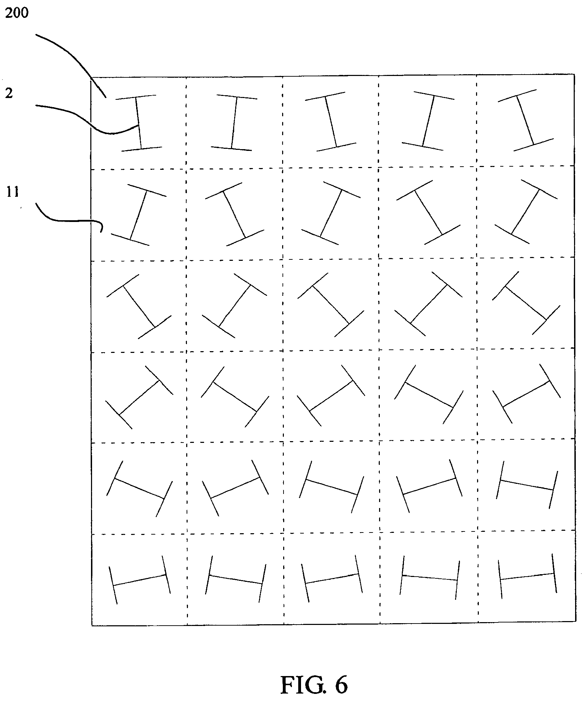

As shown in FIG. 5, the optical axes of the refractive index ellipsoids of all the cells in a same sheet layer are unparallel with each other in this embodiment. FIG. 6 illustrates use of man-made microstructures of an "I" form, not being part of the invention to achieve the 2D distribution of the optical axes shown in FIG. 5. When the incident electromagnetic wave propagates through the first sheet layer, the electric field thereof is decomposed into two orthogonal electric field components (one is parallel with the optical axis and the other is perpendicular to the optical axis) within the refractive index ellipsoid of each of different cells. By designing the depolarizer of the present disclosure in such a way that each of the cells is anisotropic and the optical axes of the refractive index ellipsoids of the cells located at different positions have different orientations, the two orthogonal components (one is parallel with the optical axis and the other is perpendicular to the optical axis) decomposed from an electric filed vector of a polarized wave having a uniform property can have different amplitudes and different phase differences. Thus, the polarization property is weakened. Each sheet layer can further weaken the polarization property of the electromagnetic wave from the previous sheet layer. Thus, the polarized electromagnetic wave is converted into an unpolarized wave or a partially polarized wave after propagating through multiple sheet layers. On the whole, vibration directions of the electric field vectors of the electromagnetic wave exiting in this case will become disorderly, thus achieving the purpose of depolarization. Likewise, FIG 5 only shows a schematic plan view of one sheet layer in this embodiment; and distribution of optical axes of other sheet layers may be the same as or different from that of the sheet layer shown in FIG. 5 so long as the electromagnetic wave can be partially changed in polarization property when exiting. FIG. 8 is a schematic view illustrating stacking of the sheet layers.

In the present disclosure, the man-made microstructures 2 are metal microstructures, each of which is a metal wire that is attached on the sheet substrate 11 and that has a pattern. The pattern of the metal wire is a non-90° rotationally symmetrical pattern. "Non-90° rotationally symmetrical" is a concept relative to "90° rotationally symmetrical". "90° rotationally symmetrical" means that a pattern can coincide with the original pattern after being rotated by 90° towards any direction about its symmetry center, and a cell formed by a metal microstructure having such a pattern is isotropic (i.e., electromagnetic parameters are the same for each point within the space of the cell). On the contrary, a cell formed by a metal microstructure having a non-90° rotationally symmetrical pattern is anisotropic (i.e., electromagnetic parameter tensors are not all the same for each point within the space of the cell). Of course in some cases, there is also a concept of two-dimensional (2D) isotropy, which means that electromagnetic parameters in a plane of a cell are isotropic and an electromagnetic wave has identical electromagnetic parameters when being incident from any direction in this plane. If the cells formed by the metal microstructures are anisotropic, the electric field vector of the electromagnetic wave propagating through the cells will be affected; and specifically, both the two orthogonal components will be affected when the electromagnetic wave propagates through each of the cells. However, as the man-made microstructures have the anisotropic electromagnetic property, the two orthogonal components will be affected to different extents from each other (i.e., the two orthogonal components will vibrate at different velocities) and, consequently, a change in phase difference occurs between the two orthogonal components. When the electromagnetic wave exits from the metamaterial converter, the electromagnetic wave has propagated through multiple cells and the phase differences are accumulated. If the final phase difference Δθ is not equal to the phase difference before incidence, then the electric field vector composed from the two orthogonal components (the electric field vector of the electromagnetic wave when exiting) is changed in polarization property with respect to the electric field vector before incidence, thus achieving polarization conversion. However, if the optical axes of all the cells are unparallel with each other, then the electromagnetic wave having a uniform polarization property will be affected asynchronously and the polarization property of the electromagnetic wave when exiting will become disorderly, thus achieving depolarization.

The metal microstructures adopted in the aforesaid three illustrative examples are in the "I" form. The "I" form is a non-90° rotationally symmetrical pattern, and a cell formed by a metal microstructure having such a pattern is anisotropic. Therefore, the optical axis can be rotated by rotating the metal microstructure of the "I" form. The metal microstructure of the "I" form is easy to be produced, and processing thereof is relatively simple.

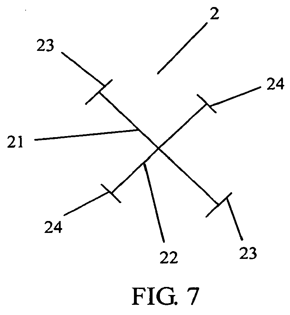

Of course, according to the invention, each of the metal microstructures may also be in a 2D snowflake form as shown in FIG. 7. The metal microstructure of the 2D snowflake form has a first main line 21 and a second main line 22 perpendicular to each other in a "+" form. Two first branch lines 23 are disposed perpendicularly at two ends of the first main line 21 respectively, and two second branch lines 24 are disposed perpendicularly at two ends of the second main line 22 respectively. The first main line 21 and the second main line 22 bisect each other, the two first branch lines 23 have their respective centers connected by the first main line 21, and the two second branch lines 24 have their respective centers connected by the second main line 22. What depicted in FIG. 7 are only illustrative; and actually, the first main line, the second main line, the first branch lines and the second branch lines all have a width. Of course, in order to achieve the anisotropy of the cell, the aforesaid metal microstructure of the 2D snowflake form must be of a non-90° rotationally symmetrical pattern (2D).

In the present disclosure, the metal wire is attached on the sheet substrate 11 through etching, electroplating, drilling, photolithography, electron etching or ion etching. Of course, a three-dimensional (3D) laser processing method may also be adopted. The metal wire is a copper wire or a silver wire. Copper and silver have a good electrical conductivity and can respond to the electric field more sensitively.

The sheet substrate 11 of the present disclosure may be formed of a ceramic, a polymer material, a ferroelectric material, a ferrite material or a ferromagnetic material. The polymer material may be polytetrafluoroethylene (PTFE). The PTFE has a good electric insulativity and thus will not interfere with the electric field of the electromagnetic wave; and moreover, the PTFE has a good chemical stability and a strong corrosion resistance and thus has a long service life. Therefore, the PTFE is a good choice for a substrate on which the man-made microstructures are attached. Of course, the polymer material may also be an FR-4 composite material, an F4b composite material or the like.

The embodiments of the present disclosure have been described above with reference to the attached drawings; however, the present disclosure is not limited to the aforesaid embodiments, and these embodiments are only illustrative but are not intended to limit the present disclosure.

## Claims

1. A depolarizer (10) based on a metamaterial, comprising a plurality of sheet layers (20) parallel with each other, wherein each of the sheet layers (20) has a sheet substrate (11) and a plurality of man-made microstructures (2) attached on the sheet substrate (11), each of the sheet substrates (11) is divided into a plurality of identical unit bodies (100), each of the unit bodies (100) and one of the man-made microstructures (2) that is attached thereon form a cell (200) that has an anisotropic electromagnetic property, and each of the sheet layers (20) has at least two cells (200) whose optical axes, corresponding to a major axis of a refractive index ellipsoïd, are unparallel with each other;
the man-made microstructures (2) are metal microstructures, each of which is a metal wire (2) that is attached on the sheet substrate (11) and that has a pattern, and the pattern of the metal wire (2) is a non-90° rotationally symmetrical pattern;
**characterized in that** the metal wire (2) is of a 2D-snowflalce form having a first main line (21) and a second main line (22) perpendicular to each other in a "+" form, two first branch lines (23) are disposed perpendicularly at two ends of the first main line (21) respectively, and two second branch lines (24) are disposed perpendicularly at two ends of the second main line (22) respectively.

2. The depolarizer (10) based on a metamaterial of claim 1, wherein the optical axes of all the cells (200) in each of the sheet layers (20) are unparallel with each other.

3. The depolarizer (10) based on a metamaterial of claim 1, wherein the metal wire (2) is attached on the sheet substrate (11) through etching, electroplating, drilling, photolithography, electron etching or ion etching.

4. The depolarizer (10) based on a metamaterial of claim 1, wherein the first main line (21) and the second main line (22) bisect each other, the two first branch lines (23) have their respective centers connected by the first main line (21), and the two second branch lines (24) have their respective centers connected by the second main line (22).

5. The depolarizer (10) based on a metamaterial of claim 1, wherein the sheet substrate (11) is formed of a ceramic, a polymer material, a ferroelectric material, a ferrite material or a ferromagnetic material.

6. The depolarizer (10) based on a metamaterial of claim 5, wherein the polymer material includes polytetrafluoroethylene (PTFE), an FR-4 composite material or an F4b composite material.

## Patentansprüche

1. Depolarisierer (10) auf Metamaterialbasis, eine Vielfalt von parallel zueinander verlaufenden Folieschichten (20) umfassend, wobei jede der Folieschichten (20) ein Foliesubstrat (11) und eine Vielfalt von künstlichen Mikrostrukturen (2) aufweist, die auf dem Foliesubstrat (11) befestigt sind, jede der Foliesubstrate (11) in eine Vielfalt identischer Einheitskörper (100) unterteilt ist, jeder der Einheitskörper (100) und eine der künstlichen Mikrostrukturen (2), die daran befestigt ist, eine Zelle (200) bilden, die eine anisotropische elektromagnetische Eigenschaft aufweist, und jede der Folieschichten (20) zumindest zwei Zellen (200) aufweist, deren optische Achsen einer Hauptachse eines Brechungsindex-Ellipsoids entsprechend nicht parallel zueinander verlaufen; die künstlichen Mikrostrukturen (2) metallische Mikrostrukturen sind, jede dieser ein Metalldraht (2) ist, der an dem Foliesubstrat (11) befestigt ist, und ein Muster aufweist, und das Muster des Metalldrahtes (2) ein nicht-90°rotationssymmetrisches Muster ist; **dadurch gekennzeichnet, dass** der Metalldraht (2) als eine Schneeflocke in 2D ausgebildet ist, die eine erste Hauptlinie (21) und eine zweite Hauptlinie (22) aufweist, die senkrecht zueinander in der Form von einem "+" verlaufen, zwei erste Zweiglinien (23) bzw. senkrecht an den zwei Enden der ersten Hauptlinie (21) angeordnet sind, und zwei zweite Zweiglinien (24) bzw. senkrecht an den zwei Enden der zweiten Hauptlinie (22) angeordnet sind.

2. Depolarisierer (10) auf Metamaterialbasis nach Anspruch 1, wobei die optische Achsen aller Zellen (200) in jeder der Folieschichten (20) nicht parallel zueinander verlaufen.

3. Depolarisierer (10) auf Metamaterialbasis nach Anspruch 1, wobei der Metalldraht (2) an dem Foliesubstrat (11) durch Ätzdruck, Galvanotechnik, Bohren, Photolithographie, Elektronenätzen, oder lonenätzen befestigt ist.

4. Depolarisierer (10) auf Metamaterialbasis nach Anspruch 1, wobei die erste Hauptlinie (21) und die zweite Hauptlinie (22) einander halbieren, die jeweiligen Mitten der ersten Zweiglinien (23) mit der ersten Hauptlinie (21) verbunden sind, die jeweiligen Mitten der zweiten Zweiglinien (24) mit der zweiten Hauptlinie (21) verbunden sind.

5. Depolarisierer (10) auf Metamaterialbasis nach Anspruch 1, wobei das Foliesubstrat (11) aus einer Keramik, einem Polymermaterial, einem ferroelektrischen Material, einem ferritischen Material oder aus einem ferromagnetischen Material ausgebildet ist.

6. Depolarisierer (10) auf Metamaterialbasis nach Anspruch 5, wobei das Polymermaterial ein Polytetrafluoroethylen (PTFE), einen FR-4 Verbundstoff oder einen F4b Verbundstoff umfasst.

## Revendications

1. Dispositif de dépolarisation (10) à base d'un métamatériau, comprenant une pluralité de couches (20) en forme de feuille mutuellement parallèles, dans lequel chacune des couches en forme de feuille (20) présente un substrat en forme de feuille (11) et une pluralité de microstructures artificielles fixées sur le substrat en forme de feuillle (11), chacun des substrats en forme de feuille étant divisé en une pluralité de corps unitaires identiques (100), chacun des corps unitaires (100) et l'une des microstructures artificielles (2) qui y est fixée forment une cellule (200) qui présente une propriété électromagnétique anisotrope, et chacune des couches en forme de feuille (20) présente au moins deux cellules (200) dont les axes optiques correspondant à un axe principal d'une ellipsoïde des indices de réfraction ne sont pas parallèles les uns aux autres; les microstructures artificielles (2) sont des microstructures métalliques, chacune d'entre elles étant un fil métallique (2) qui est fixé au substrat en forme de feuille (11) et qui présente un motif, le motif du fil métallique (2) étant un motif à symétrie de rotation non orthogonale; **caractérisé en ce que** le fil métallique (2) a la forme forme d'un flocon de neige en 2D présentant une première ligne principale (21) et une seconde ligne principale (22) perpendiculaires l'une à l'autre en forme de "+", deux premières lignes formant ramification (23) sont disposées respectivement perpendiculairement aux deux extrémités de la première ligne principale (21), et deux secondes lignes formant ramification (24) sont disposées respectivement perpendicalairement aux deux extrémités de la seconde ligne principale (22).

2. Dispositif de dépolarisation (10) à base d'un métamatériau selon la revendication 1, dans lequel les axes optiques de toutes les cellules (200) dans chacune des couches en forme de feuille (20) ne sont pas parallèles les uns aux autres.

3. Dispositif de dépolarisation (10) à base d'un métamatériau selon la revendication 1, dans lequel le fil métallique (2) est fixé au substrat en forme de feuille (11) par gravure, électrogalvanisation, forage, photolithographie, gravure électronique ou gravure ionique.

4. Dispositif de dépolarisation (10) à base d'un métamatériau selon la revendication 1, dans lequel la première ligne principale (21) et la seconde ligne principale (22) se coupent mutuellement en deux parties égales, les deux premières lignes formant ramification (23) ont leurs centres respectifs raccordés par la première ligne principale (21), les secondes lignes formant ramification (24)) ont leurs centres respectifs raccordés par la seconde ligne principale (22).

5. Dispositif de dépolarisation (10) à base d'un métamatériau selon la revendication 1, dans lequel le substrat en forme de feuille (11) est formé d'une céramique, d'un matériau polymère, d'un matériau ferroélectrique, d'un matériau ferritique ou d'un matériau ferromagnétique.

6. Dispositif de dépolarisation (10) à base d'un métamatériau selon la revendication 5, dans lequel le matériau polymère comprend un polytetrafluoroéthylène (PTFE), un matériau composite FR-4 ou un matériau composite F4b.
